# FASCICULE DE BREVET EUROPEEN

(11) **EP 2 206 133 B1**
(45) Date de publication et mention de la délivrance du brevet: **28.03.2012**
(21) Numéro de dépôt: 08787495.4
(22) Date de dépôt: 26.08.2008
(51) Int. Cl.: H01H 3/30, H01H 3/54, F16D 41/20

(54) **ACTIONNEUR D'UN INTERRUPTEUR COMPRENANT UN DISPOSITIF D'ACCOUPLEMENT A ROUE LIBRE.**
STELLGLIED FÜR EINEN SCHALTER MIT EINER FREILAUF-KOPPELANORDNUNG
ACTUATOR FOR SWITCH COMPRISING A FREEWHEEL COUPLING DEVICE.

(30) Priorité: 29.10.2007 FR 0758658
(43) Date de publication de la demande: 14.07.2010
(73) Titulaire: ALSTOM Grid AG, 5036 Oberentfelden (CH)
(72) Inventeur: SUTER, Ernst, CH-5741 Kölliken (CH)
(74) Mandataire: Ilgart, Jean-Christophe
(86) Numéro de dépôt international: PCT/EP2008/061149
(87) Numéro de publication internationale: WO 2009/056373

(56) Documents cités:
- EP-A- 0 148 424
- EP-A- 0 678 685
- EP-A- 1 408 522
- EP-A- 1 788 283
- DE-A1- 19 516 973
- DE-C- 112 158
- DE-C1- 19 503 679
- DE-U1- 8 800 180
- FR-A- 1 067 245
- FR-A- 2 720 805
- JP-A- 4 050 521
- US-A- 3 217 848

## Description

### DOMAINE TECHNIQUE ET ART ANTÉRIEUR

L'invention concerne un actionneur d'un interrupteur comprenant un dispositif d'accouplement à roue libre.

Elle s'applique particulièrement aux interrupteurs à haute ou moyenne tension.

On connait déjà de l'art antérieur des dispositifs d'accouplement à roue libre.

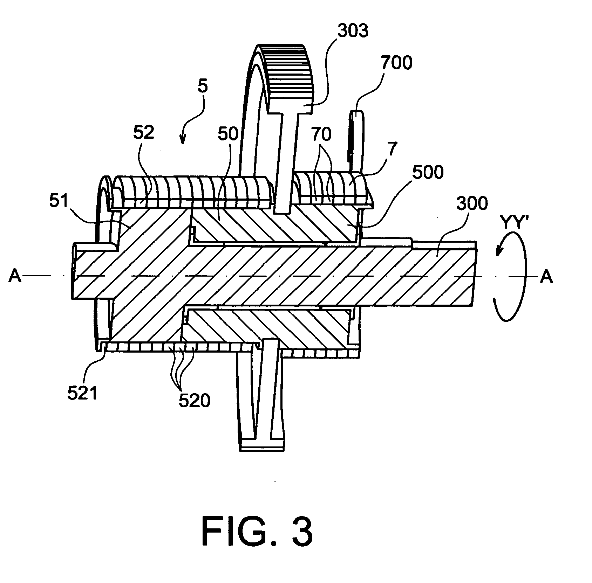

Par exemple, le document DE 195 16 973 divulgue un dispositif d'accouplement à roue libre réalisé par ressort enroulé 25 avec spires 25a, 25b enroulées autour de parties cylindriques (voir par exemple la figure 3 et la colonne 3, lignes 44 à 49). Un espace 26 selon la direction axiale est prévu entre ces éléments, ce qui permet d'avoir un effet de ressort supplémentaire. Ce dispositif ne permet pas d'obtenir un angle de retour très faible pour la roue libre. Un autre dispositif d'accouplement à roue lible est connu du document JP 04 050521

On connait également de l'art antérieur des actionneurs de disjoncteur à haute tension qui comprennent un dispositif d'accouplement à roue libre.

Les actionneurs de disjoncteur à haute ou moyenne tension comprennent généralement un moteur qui permet de charger, par l'intermédiaire d'un train d'engrenages, un ressort de fermeture dont le relâchement permet de déplacer au moins un contact mobile vers l'autre contact, et donc de fermer l'interrupteur. En d'autres termes, le ressort de fermeture est disposé dans l'actionneur, de manière à ce que la libération de l'énergie élastique qu'il a emmagasinée provoque la fermeture des contacts de l'interrupteur.

Le dispositif d'accouplement à roue libre est ainsi prévu pour accoupler une roue d'entraînement du train d'engrenages et le moteur de sorte que la roue atteigne la vitesse de rotation démultipliée du moteur. Lors de la charge du ressort, le moteur entraîne la roue d'entraînement jusqu'au point mort haut du ressort de fermeture.

Pour fermer l'interrupteur, le ressort de fermeture entraîne la roue d'entraînement à une vitesse beaucoup plus grande que celle obtenue par l'entraînement du moteur. Lors de cette fermeture de l'interrupteur par le ressort de fermeture, le moteur est désaccouplé du train d'engrenages par l'intermédiaire du dispositif à roue libre, afin d'une part de protéger mécaniquement le moteur et l'engrenage et d'autre part de diminuer l'inertie des éléments entraînés par le ressort. En effet, les grandes accélérations et vitesses mises en jeu à travers le train d'engrenages lors de la fermeture risqueraient de provoquer une usure prématurée d'au moins certaines pièces du moteur et de l'engrenage. Dans chacun des cas (pendant l'armement du ressort de fermeture et pendant l'opération de fermeture), le sens de rotation de la roue d'entraînement est toujours le même. Cela rend possible la récupération d'énergie du système en retour dans le ressort de fermeture. La récupération réduit le temps d'armement du ressort et l'énergie à fournir par le moteur. Pendant une opération de fermeture, après qu'un angle spécifique de rotation de la roue d'entraînement ait été atteint, le moteur est mis en marche. Dans une première phase, la roue d'entraînement a une vitesse de rotation plus grande que lorsqu'elle est commandée par le moteur, le dispositif d'accouplement à roue libre est désaccouplé, la roue d'entraînement et le moteur tournent librement. Dans une seconde phase, lorsque suffisamment d'énergie a été récupérée par retour vers le ressort de fermeture, la roue d'entraînement a ralenti à une vitesse de rotation plus faible que lorsqu'elle est commandée par le moteur. Mais, dans cette deuxième phase, le dispositif d'accouplement à roue libre s'accouple et le moteur commande la roue d'entraînement pour un réarmement complet du ressort de fermeture.

Ainsi, il est connu du document DE 195 03 679 un actionneur de disjoncteur haute tension dans lequel un roulement à roue libre est agencé entre la dernière roue dentée d'un engrenage de chargement et le pignon lié à la roue d'entraînement couplée au ressort de fermeture ainsi chargé. Le couple est transmis uniquement dans le sens de l'engrenage vers le ressort de fermeture. Le type de roulement à roue libre n'est pas spécifié.

Le document EP 1 408 522 divulgue un actionneur de disjoncteur à haute tension comprenant un dispositif d'accouplement à roue libre qui consiste en un embrayage conique. Grâce à cet embrayage conique, il y a transmission d'un couple d'un arbre moteur à un arbre rotatif selon un sens prédéterminé de mouvement rotatif entre les deux arbres et fonctionnement en roue libre de l'arbre rotatif selon un sens opposé du mouvement rotatif entre les deux arbres.

Ces actionneurs d'interrupteurs à dispositifs d'accouplement à roue libre existants ne sont pas complètement satisfaisants : ils peuvent ainsi être conçus avec un nombre de pièces important donc avoir un coût conséquent et/ou une maîtrise compliquée des paramètres de friction.

Un but de l'invention est donc de proposer un actionneur d'interrupteur comprenant un dispositif d'accouplement à roue libre qui soit conçu avec un nombre de pièces réduit et à moindre coût par rapport à ceux existants.

Un autre but de l'invention est de proposer un actionneur d'interrupteur comprenant un dispositif d'accouplement à roue libre dont la maîtrise des paramètres est simplifiée par rapport à ceux existants, en particulier en étant moins dépendant des conditions environnementales (température, humidité, lubrifiants, poussières).

### EXPOSÉ DE L'INVENTION

Ces buts sont atteints par un actionneur d'interrupteur selon la revendication 1 comprenant une première partie apte à être entraînée par une puissance d'entraînement et une deuxième partie apte à entraîner un contact mobile de l'interrupteur durant l'opération de fermeture de l'interrupteur, un dispositif d'accouplement à roue libre accouplant entre elles les deux parties de l'actionneur pour transmettre la puissance d'entraînement à un ressort de l'actionneur afin de le charger et les désaccouplant pour transmettre le couple du ressort chargé au contact mobile mais pas à la première partie de l'actionneur. Selon l'invention, le dispositif d'accouplement à roue libre de l'actionneur comprend un premier cylindre solidaire de la première partie, un deuxième cylindre solidaire de la deuxième partie et adjacent au premier cylindre selon un axe commun, un ressort hélicoïdal à spires jointives enroulé avec contact autour des deux cylindres adjacents et en étant en butée axiale selon l'axe commun.

Selon l'invention, l'accouplement entre le premier et deuxième cylindre est réalisé par la rotation du premier cylindre, selon un sens XX' et une vitesse supérieure à celui du deuxième cylindre à l'arrêt ou en rotation selon le même sens XX' : dans cette configuration d'accouplement, la différence des vitesses provoque un resserrement radial des spires autour du deuxième cylindre et ce dernier est entraîné par le premier cylindre.

Selon l'invention, le fonctionnement en roue libre du premier cylindre est réalisé par une rotation du deuxième cylindre, selon le même sens mais à une vitesse supérieure à celle du premier cylindre : dans cette configuration de roue libre, cette différence de vitesses provoque un desserrement radial des spires autour du premier cylindre jusqu'à ce que ce dernier soit libre en rotation.

Avantageusement, le sens de rotation des premier et deuxième cylindre est le même en fonctionnement d'accouplement et en fonctionnement de roue libre. Cela rend possible la récupération d'énergie du système en retour dans le ressort de fermeture.

Selon un mode de réalisation avantageux, la deuxième partie comprend un arbre solidaire du deuxième cylindre, les deux cylindres étant portés par l'arbre.

De préférence, la première partie comprend une roue dentée solidaire du premier cylindre et portée par l'arbre. Cette roue dentée peut engrener directement avec la sortie du moteur d'actionneur d'interrupteur.

La deuxième partie comprend avantageusement un pignon solidaire de l'arbre portant les deux cylindres, le pignon en rotation entraînant directement une autre roue dentée solidaire du ressort de l'actionneur afin de le charger.

Selon un agencement avantageux, la roue dentée et le pignon sont agencés d'un même côté axial des deux cylindres adjacents.

La fonctionnalité d'un actionneur de disjoncteur à haute tension est connue : un moteur électrique charge en fonctionnement normal un ressort de fermeture. Après qu'une coupure ait été effectuée, le ressort de fermeture est relâché et vient déplacer au moins un contact mobile par l'intermédiaire notamment d'une came afin de réaliser la fermeture du disjoncteur.

La fonctionnalité d'un dispositif d'accouplement à roue libre dans un actionneur d'un disjoncteur à haute tension est connue : il est destiné à faire en sorte que le relâchement du ressort qui vient déplacer le contact mobile n'entraîne pas en rotation le moteur, car cela ralentirait le déplacement du contact mobile par inertie et donc cela réduirait l'efficacité de l'actionneur. Du document EP 1 408 522 il est en outre connu un dispositif d'accouplement à roue libre constituée par un cône de friction. Les coûts de réalisation des pièces complexes (filets trapézoïdaux) sont relativement importants et le contrôle dimensionnel de ces pièces est problématique.

L'invention consiste principalement à remplacer le cône de friction du dispositif d'accouplement à roue libre par un ressort enroulé et à adapter l'agencement des deux cylindres de friction aux conditions d'encombrement requises par l'application à un actionneur d'interrupteur à haute ou moyenne tension. En d'autres termes, la solution ne consiste pas uniquement à remplacer le cône de friction du document EP 1 408 522 par un ressort enroulé mais en outre à faire porter les deux cylindres de friction par un même arbre porteur indépendant du moteur et à les agencer préférentiellement du même côté par rapport à la roue dentée d'entraînement et au pignon entraîné.

On obtient ainsi un actionneur à roue libre compact, facile à assembler, de faible coût et de dimensionnement simple.

Avec un tel agencement, on peut faire passer un fort couple moteur pour charger le ressort de fermeture. L'opération de fermeture est rapide à l'aide du ressort de fermeture chargé, sans avoir à accélérer le moteur et les engrenages intermédiaires du train d'engrenages disposé entre le moteur et l'arbre de fermeture du contact mobile d'interrupteur.

Selon une variante, il est également possible d'agencer la roue dentée et le pignon de part et d'autre des cylindres adjacents.

Selon une caractéristique avantageuse, le premier et deuxième cylindre ont le même diamètre externe, le diamètre interne du ressort enroulé à l'état relâché étant inférieur dans la zone de contact avec le premier cylindre. Cela a pour avantage d'impliquer une usure et une tension locale du ressort moindres.

Selon cette caractéristique avantageuse, le diamètre interne du ressort enroulé à l'état relâché est inférieur de 0,3 à 6 % au diamètre externe des cylindres.

Selon une autre caractéristique avantageuse, le diamètre externe du premier cylindre est supérieur de 0,5 à 2 % à celui du deuxième cylindre, le diamètre interne du ressort enroulé à l'état relâché étant inférieur de 0,3 à 6 % au diamètre externe du deuxième cylindre. Avec une telle caractéristique, le ressort à spires enroulé est toujours solidaire du premier cylindre, même en fonctionnement désaccouplé en roue libre. Selon cette caractéristique, la longueur de chacun des cylindres peut être approximativement égale à la moitié de leur diamètre. L'épaisseur des spires, réalisées de préférence en acier inoxydable, peut être avantageusement égale à 0,05 fois le diamètre de cylindre. Grâce à cela, le couple est transmis avec suffisamment de marge de sécurité et avec un angle de retour très faible.

Selon un mode de réalisation avantageux, il est prévu une bague de guidage agencée axialement au moins le long du deuxième cylindre et en entourant le ressort hélicoïdal à spires à une distance radiale au maximum égale à 0,5 fois l'épaisseur e des spires du ressort à l'état relâché.

La distance radiale peut avantageusement être comprise entre 5 et 10 % de l'épaisseur des spires du ressort.

Un montage particulièrement avantageux consiste à prévoir le ressort hélicoïdal montée avec ajustement serré dans la bague de guidage elle-même montée avec ajustement serré dans le premier cylindre, ces ajustements serrés étant réalisés sur au moins une partie de la dimension axiale du premier cylindre.

Avec un tel montage avec bague de guidage supplémentaire, il est possible d'utiliser l'actionneur d'interrupteur selon l'invention dans une gamme d'énergie de fermeture plus importante. En effet, dans cette gamme d'énergie plus importante, un risque possible est que le ressort hélicoïdal ait un mouvement d'oscillations généré par la rotation à vitesse élevée du deuxième cylindre. Cela aurait pour résultat d'augmenter et de rendre variable l'angle de retour, subi par les cylindres dans le sens de blocage relatif avant que le dispositif d'accouplement bloque réellement. En implantant une bague de guidage du ressort à spires comme défini ci-dessus, on limite les oscillations possibles de ce dernier.

Selon une variante avantageuse de l'invention, les extrémités libres du ressort hélicoïdal s'étendent selon la courbure des spires. Cela permet de réaliser un accouplement sous un fort couple moteur.

Selon un mode de réalisation complémentaire, l'actionneur comprend en outre un ressort hélicoïdal à spires jointives enroulé autour d'une partie cylindrique solidaire du premier cylindre et dont une extrémité recourbée est fixée à une partie fixe de l'actionneur de sorte que la rotation des cylindres accouplés entre eux dans le sens YY' inverse au sens XX' soit bloquée. Dans le cas d'un actionneur d'interrupteur, il se peut que le moteur ne soit pas alimenté, par exemple du fait d'une interruption de tension. Dans ces conditions de non fonctionnement du moteur, il se peut alors que le ressort de fermeture commence à faire tourner les roues dentées du train d'engrenage en sens inverse, c'est-à-dire vers l'arrière. Cela peut engendrer des dommages aux pièces reliées au train, telles que le disque à cames de fermeture ou les pièces du train d'engrenage et le moteur. Le ressort hélicoïdal à spires enroulé complémentaire au ressort à fonction de roue libre vient ainsi bloquer le train d'engrenages aussi longtemps qu'il tend à tourner en sens inverse. L'utilisation d'un ressort enroulé en tant que pièce de blocage du train d'engrenages présente de nombreux avantages :
- un coût unitaire de pièce faible ;
- un fonctionnement précis tel que l'angle de retour avant blocage du train d'engrenages est de l'ordre de 1°;
- une grande fiabilité de fonctionnement.

En outre, positionner la pièce de blocage autour du deuxième cylindre, et en particulier autour de l'arbre porteur commun aux deux cylindres au lieu de la positionner comme usuellement dans le train d'engrenage à proximité du moteur offre de nombreux avantages supplémentaires :
- une minimisation de l'impact du jeu de fonctionnement du train d'engrenages : en effet, une seule roue dentée peut désormais être implantée entre le ressort de fermeture et le ressort enroulé à fonction de blocage selon l'invention. L'impact mécanique résultant d'une interruption d'alimentation moteur et donc un blocage moteur est réduit à ce seul étage ;
- une réduction du dimensionnement de la partie du train d'engrenages disposée entre le ressort de blocage et le moteur; cette réduction peut aller jusqu'à utiliser des matériaux plastiques pour la réalisation de cette partie d'engrenages ;
- la possibilité d'un pré-assemblage en un seul module des deux cylindres autour desquels est entouré le ressort hélicoïdal à spires à fonction de roue libre, de l'arbre porteur et du ressort enroulé à fonction de blocage.
- la fiabilité et les faibles coûts de ce type de ressort permettent de disposer l'anti-retour près du ressort de fermeture avec une influence minime sur le coût de la solution.

L'actionneur selon l'invention peut être du type à entraînement par moteur, c'est-à-dire comprenant un moteur entraînant le contact mobile de haute tension sans l'intermédiaire d'un disque à cames.

L'invention concerne également un interrupteur à haute ou moyenne tension, tel qu'un disjoncteur ou un sectionneur de terre comprenant un actionneur défini précédemment.

L'invention concerne enfin un sectionneur de terre à pouvoir de fermeture sur court circuit comprenant un actionneur défini précédemment dont la durée de fermeture est inférieure à 100 ms.

### BRÈVE DESCRIPTION DES DESSINS

D'autres caractéristiques et avantages ressortiront mieux à la lecture de la description détaillée de l'invention faite à titre illustratif en références aux figures selon lesquelles :
- la figure 1 est une vue en perspective d'un actionneur de disjoncteur haute tension conforme à l'invention ;
- la figure 2 est une vue en coupe longitudinale du dispositif d'accouplement à roue libre de l'actionneur selon la figure 1 ;
- la figure 3 est une vue en coupe longitudinale du dispositif selon la figure 2 réalisé avec une fonction complémentaire de blocage ;
- la figure 4 est une vue en coupe longitudinale d'un dispositif d'accouplement à roue libre d'un actionneur d'interrupteur selon l'invention avec une fonction supplémentaire de guidage du ressort à spires ;
- la figure 4A est une vue de détail de la figure 4.

### EXPOSÉ DÉTAILLÉ DE MODES DE RÉALISATION PARTICULIERS

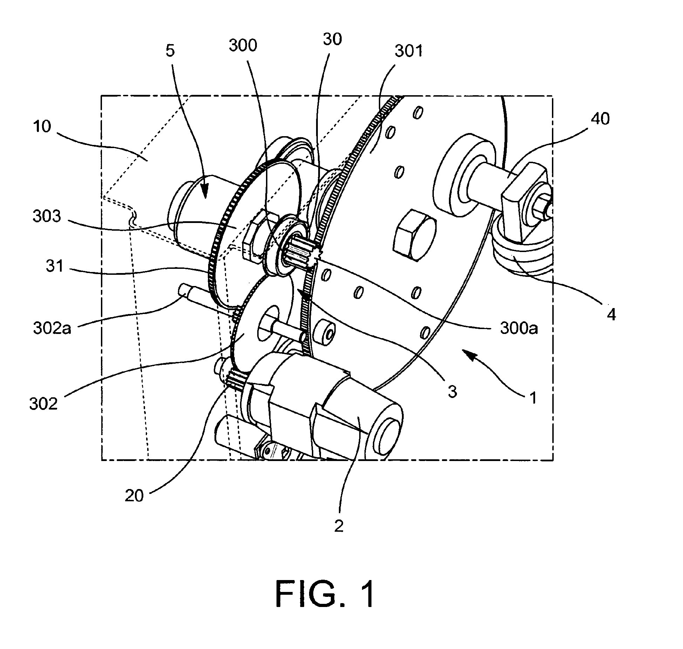

Sur la figure 1, on a représenté en perspective un actionneur 1 de disjoncteur haute tension selon l'invention.

Cet actionneur 1 comprend un bâti 10 représenté en pointillés dans lequel sont logés un moteur électrique 2, un train d'engrenages 3 et un ressort de fermeture 4 de contact mobile d'interrupteur.

Plus exactement, le moteur 2 est monté en prise avec le train d'engrenages 3 pour charger le ressort de fermeture 4 lorsque le moteur est alimenté.

Dans d'autres modes de réalisation, le moteur peut être remplacé par une manivelle à main pour la charge manuelle du ressort.

L'actionneur 1 comprend en outre un dispositif d'accouplement à roue libre 5 implanté dans la chaîne cinématique du train d'engrenages 3. Ce dispositif 5 a pour fonction d'empêcher la rotation du moteur 2 et la partie amont 31 du train 3 lorsque le relâchement du ressort de fermeture 4 préalablement chargé vient déplacer le contact mobile de l'interrupteur.

Selon le mode de réalisation illustré, le train d'engrenages 3 comprend une partie aval 30 et une partie amont 31, les termes aval et amont étant à comprendre en référence à leur position par rapport au dispositif d'accouplement à roue libre 5 et à la transmission du couple depuis le moteur 2 vers le ressort de fermeture 4.

La partie aval 30 est donc implantée entre le dispositif d'accouplement à roue libre 5 selon l'invention et le ressort de fermeture 4. Cette partie 30 comprend un arbre de transmission 300 dont le pignon 300a est en prise avec une première roue dentée 301 qui est celle de plus grand diamètre du train 3. Un axe 40 est fixé à la roue dentée 301 et à une extrémité du ressort de fermeture 4.

La partie amont 31 est donc implantée entre le moteur 2 et le dispositif d'accouplement à roue libre 5 selon l'invention. Cette partie amont 31 comprend une deuxième roue dentée 302 en prise avec l'arbre de sortie 20 du moteur 2 et une troisième roue dentée 303 en prise avec un pignon non représenté solidaire de l'axe 302a qui porte la deuxième roue dentée 302.

Ainsi, le dispositif d'accouplement à roue libre 5 selon l'invention est implanté dans la dernière portion du train d'engrenages 3 qui permet de charger le ressort de fermeture 4. En d'autres termes, une seule roue dentée 301 et pignon 300a sont implantée en aval du dispositif 5.

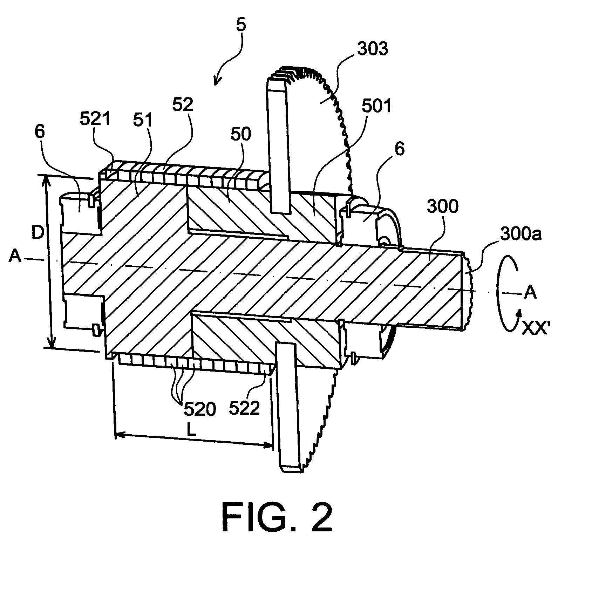

La figure 2 montre précisément la forme et l'agencement des moyens constituant le dispositif d'accouplement à roue libre 5 selon l'invention.

Le dispositif 5 comprend un premier cylindre 50 solidaire de la troisième roue dentée 303, un deuxième cylindre 51 solidaire de l'arbre 300 et adjacent au premier cylindre 50 selon un axe commun AA, un ressort hélicoïdal 52 à spires jointives 520 enroulé avec contact autour des deux cylindres adjacents 50,51, et dont les deux extrémités libres 521,522 s'étendent selon la courbure des spires en étant en butée axiale selon l'axe commun AA.

Dans le mode de réalisation illustré, l'arbre 300 et le deuxième cylindre 51 constituent une seul pièce monobloc et l'arbre 300 portant également le premier cylindre 50. L'entrée du dispositif 5 constituée par la troisième roue dentée 303 et la sortie du dispositif 5 constituée par le pignon 300a sont, selon ce mode illustré, agencés d'un même côté axial du dispositif 5, c'est-à-dire du même côté des deux cylindres adjacents 50, 51.

Dans le mode de réalisation illustré, le diamètre externe D des deux cylindres 50, 51 est supérieure de 1 % au diamètre interne de ressort 52 dans son état relâché. La longueur L du ressort 52 est sensiblement égale à son diamètre interne.

Dans un mode de réalisation avantageux, le diamètre du second cylindre 51 est de 1 % supérieur au diamètre interne du ressort à l'état relâché, tandis que le diamètre du premier cylindre 50 est également 1 % supérieur au diamètre du second cylindre 51. Grâce à cela, le ressort tourne avec le premier cylindre 50 dans toutes les conditions de fonctionnement, seul le cylindre 51 doit alors être réalisé en un matériau résistant à l'abrasion. Le même effet peut être obtenu si les deux cylindres ont le même diamètre mais le diamètre interne du ressort à l'état relâché est inférieur dans la zone dans laquelle il est en contact avec le premier cylindre 50. La différence de diamètre est avantageusement adaptée en fonction du couple à transmettre.

Le fonctionnement du dispositif 5 va maintenant être expliqué.

Pour le fonctionnement d'accouplement du moteur 2 avec le ressort de fermeture 4, la troisième roue dentée 303 et le premier cylindre 50 solidaires entre eux ont tendance à tourner plus vite dans le sens XX' que le deuxième cylindre 51 et le pignon 300a solidaires entre eux. Les forces de friction résultantes produisent une charge de tension tangentielle du ressort 52 qui resserre radialement les spires 520 autour des deux cylindres 50, 51. Autrement dit, le ressort 52 tend à diminuer son diamètre interne, la force radial entre le ressort 52 et les cylindres 50, 51 est augmentée, l'accouplement est réalisé entre la roue dentée 303 et le pignon 300a car la friction est telle que le deuxième cylindre 51 est entraîné par le premier cylindre 50 par l'intermédiaire du ressort 52.

Pour le fonctionnement en roue libre du premier cylindre 50, le pignon 300a et le deuxième cylindre 51 solidaires entre eux ont tendance, sous l'action du ressort de fermeture, à tourner plus vite dans le sens XX' que la roue dentée 303 et le premier cylindre 50 solidaires entre eux. Les forces de friction résultantes produisent une ouverture des spires 520. Les spires 520 s'écartent donc des deux cylindres 50, 51. Ainsi, le premier cylindre 50 est désaccouplé du second cylindre 51, seul un couple de friction rémanent négligeable est transmis du pignon 300a vers la roue dentée 303.

Dans l'actionneur selon l'invention, au cours d'une opération de fermeture, le pignon 300a est libre d'être en rotation dans le sens XX' avec une vitesse supérieure à celle de la roue dentée 303. Le dispositif 5 fonctionne alors en roue libre. Le pignon 300a est commandé par le ressort de fermeture 4 par l'intermédiaire de la roue dentée 301 de plus grand diamètre du train d'engrenages 3. L'actionneur 1 réalise ainsi une opération de fermeture rapide sans accélération du moteur 2 et de la partie amont 31 du train d'engrenages 3.

Dès que le ressort de fermeture 4 a passé le point mort inférieur et a ralenti la roue dentée de plus grand diamètre 301 à une vitesse sensiblement égale à la partie amont 31 du train d'engrenages 3, le pignon 300a tend à être en rotation à une vitesse inférieure à la roue dentée 303 entraînée par le moteur 2. Le dispositif devient bloquant pour des très faibles différences de vitesse et avec un angle de retour rotatif minimal.

Le dispositif 5 fonctionne alors de nouveau en accouplement et la roue dentée 303 entraîne à nouveau le pignon 300a, ce qui permet une nouvelle opération de charge du ressort de fermeture 4.

Le fonctionnement d'un tel dispositif d'accouplement à roue libre 5 génère un minimum de forces axiales, contrairement au dispositif à roue libre avec cône de friction selon le document EP 1 408 522. Cela évite d'utiliser des butées à billes reprenant ces efforts axiaux. Les pièces sont moins complexes et alors moins coûteuses.

L'assemblage des moyens du dispositif 5 est facile à réaliser. Le ressort 52 à spires 520 est légèrement graissé durant l'assemblage du dispositif 5. Un graissage supplémentaire ultérieur n'est pas requis. L'application accidentelle de lubrifiants, la présence d'eau condensée ou des températures basses n'altèrent pas la fonction d'accouplement à roue libre du dispositif 5.

En outre, l'angle de retour du dispositif d'accouplement à roue libre 5 selon l'invention, est approximativement égal à 1°, ce qui est un fonctionnement extrêmement précis et ce qui minimise l'impact de la charge du train d'engrenage 3.

La figure 3 montre un mode de réalisation d'une fonction complémentaire de l'actionneur 1 selon l'invention. Cette fonction complémentaire de blocage est connue dans les actionneurs d'interrupteur et elle consiste à bloquer le train d'engrenages 3 en cas de rotation non désirée en sens inverse du sens de chargement du ressort de fermeture 4. En effet, si le moteur 2 n'est pas sous tension, par exemple en cas d'interruption du circuit d'alimentation, ou si le chargement du ressort est réalisé manuellement par une manivelle, il peut se produire un ralentissement et puis une décharge du ressort de fermeture 4 durant son opération de charge. Le ressort de fermeture ainsi ralenti 4 peut, à l'extrême, commencer à mettre en rotation le train d'engrenages 3 en arrière c'est-à-dire dans un sens YY' inverse à celui XX' en conditions de fonctionnement normales. La fonction de blocage est ainsi prévue pour bloquer le train 3 d'engrenages aussi longtemps qu'il a tendance à tourner en sens inverse YY'.

Dans le mode de réalisation illustré de la figure 3, la fonction de blocage arrière est réalisée par un ressort hélicoïdal à spires 70 enroulé autour d'une partie cylindrique 500 qui est solidaire du premier cylindre 50. Dans le mode de réalisation illustré à la figure 3, le premier cylindre 50 et la partie 500 forment une seule pièce monobloc et la roue dentée 303 solidaire est implantée entre eux. En d'autres termes, le ressort 7 est implanté axialement entre la roue dentée 303 et le pignon 300a.

Le ressort 7 comprend une extrémité recourbée sous la forme d'une oreille 700 qui est fixée à une partie fixe de l'actionneur, non représentée. Le ressort 7 a avantageusement un diamètre interne à l'état relâché qui est de 0,5 à 2 % plus petit que le diamètre externe de la partie cylindrique 500.

Dans le sens de rotation YY' inverse de celui XX' en conditions normales de chargement du ressort de fermeture 4, les spires 70 du ressort 7 sont resserrées radialement et les forces de friction résultantes accouplent le ressort 7 au cylindre 500 : le cylindre 500 est alors bloqué. Ce blocage est réalisé avec une grande précision : typiquement l'angle de retour arrière dans le sens YY' est de 1°.

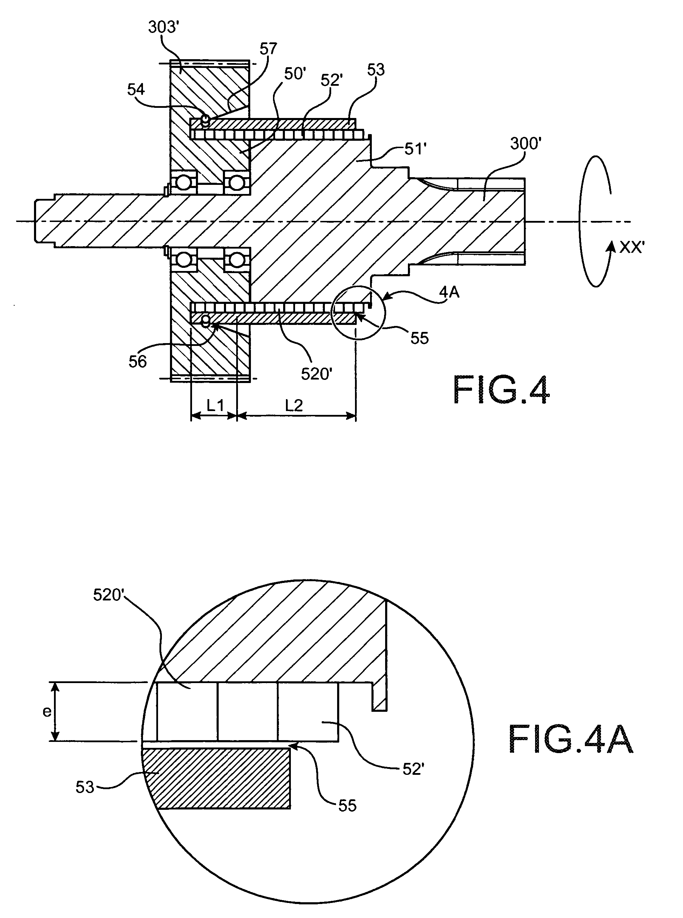

Dans le mode de réalisation illustré de la figure 4, il est prévu d'implanter une bague de guidage supplémentaire 53 afin d'éviter au ressort hélicoïdal 52' à spires 520' d'avoir des oscillations non souhaitées.

Ainsi, comme visible sur la figure 4, une bague de guidage métallique 53 entoure les spires 520' du ressort 52' en étant agencé à une certaine distance radiale 55. Cette distance radiale 55 est suffisamment importante pour permettre au ressort de se déplacer d'une position de contact avec le cylindre 51' à une position libre du contact avec ce dernier. Mais cette distance radiale 55 est suffisamment petite pour réduire de manière significative l'amplitude des oscillations du ressort 52'. Ainsi, par exemple, cette distance peut être comprise entre 5 et 10 % de l'épaisseur e des spires 520' du ressort 52' à l'état relâché de ce dernier. Cette distance 55 peut aussi être comprise entre 0.3 % et 0.6 % du diamètre interne du ressort à l'état relâché.

Le montage avec distance radiale 55 peut être réalisé axialement au moins le long du cylindre 51' mais également le long du cylindre 50'. Sur les figures 4 et 4A, le montage de la bague de guidage est prévu axialement de sorte à avoir la distance radiale tout le long du cylindre 51' et avec une seule spire 520' radialement distante le long du premier cylindre 50'. Sur la longueur restante du ressort 52', la bague de guidage 53' est montée avec ajustement serré. Plus précisément, la bague de guidage 53 est montée avec ajustement serré autour du ressort 52' et à l'intérieur du premier cylindre 50'. Ainsi, le ressort 52', la bague de guidage 53 et le premier cylindre 50' sont solidaires en rotation. Le montage avec ajustement serré peut être réalisé en utilisant une bague de guidage de diamètre réduit sur une longueur L1 qui correspond à une partie du premier cylindre 50' ou en utilisant un premier cylindre 50' qui a sur une longueur L1 un diamètre plus large que le diamètre du second cylindre 51'.

Sur la figure 4, le premier cylindre 50' est réalisé sous la forme d'une rainure directement dans la roue dentée 303'. La bague de guidage 53 est bloquée en translation axiale par un circlips 54. La forme de la rainure a en outre une portion d'extrémité libre conique afin de faciliter le montage de la bague de guidage 53. Celle-ci présente également une extrémité de forme conique afin de faciliter son montage.

Il va de soi que d'autres modes de réalisation peuvent être envisagés dans le cadre des revendications.

## Revendications

1. Actionneur (1) d'interrupteur comprenant une première partie (302, 31, 303) apte à être entraînée par une puissance d'entraînement et une deuxième partie (300a , 301) apte à entraîner un contact mobile de l'interrupteur durant l'opération de l'interrupteur, un dispositif d'accouplement à roue libre (5) accouplant entre elles les deux parties (302, 31, 303; 300a, 301) de l'actionneur pour transmettre la puissance d'entraînement à un ressort (4) de l'actionneur afin de le charger et, les désaccouplant pour transmettre le couple du ressort chargé au contact mobile mais pas à la première partie (302, 31, 303) de l'actionneur (1), **caractérisé en ce que** le dispositif d'accouplement à roue libre (5) comprend un premier cylindre (50) solidaire de la première partie (302, 31, 303), un deuxième cylindre (51) solidaire de la deuxième partie (300a, 301) et adjacent au premier cylindre (50) selon un axe commun (AA), un ressort hélicoïdal (52) à spires (520) jointives enroulé avec contact autour des deux cylindres adjacents (50,51) en étant en butée axiale selon l'axe commun, l'accouplement entre le premier (50) et deuxième (51) cylindre étant réalisé par la rotation du premier cylindre (50), selon un sens (XX') et une vitesse supérieure à celui du deuxième cylindre (51) à l'arrêt ou en rotation selon le même sens (XX'), qui provoque un resserrement radial des spires (520) autour du deuxième cylindre (51) jusqu'à ce que ce dernier atteigne la vitesse du premier cylindre (50), le fonctionnement en roue libre du premier cylindre (50) étant réalisé par une rotation du deuxième cylindre (51), selon le même sens (XX') mais à une vitesse supérieure à celle du premier cylindre (50), qui provoque un desserrement radial des spires (520) autour du premier cylindre (50) jusqu'à ce que ce dernier soit libre en rotation.

2. Actionneur (1) selon la revendication 1, dans lequel le sens de rotation (XX') des premier et deuxième cylindre est le même en fonctionnement d'accouplement et en fonctionnement de roue libre.

3. Actionneur (1) selon la revendication 2, dans lequel la deuxième partie (300a) comprend un arbre (300) solidaire du deuxième cylindre (51), les deux cylindres (50, 51) étant portés par l'arbre (300).

4. Actionneur (1) selon la revendication 3, dans lequel la première partie comprend une roue dentée (303) solidaire du premier cylindre (50) et portée par l'arbre (300).

5. Actionneur (1) selon la revendication 3 ou 4, dans lequel la deuxième partie comprend un pignon (300a) solidaire de l'arbre (300) portant les deux cylindres (50,51), le pignon (300a) en rotation entraînant directement une autre roue dentée (301) solidaire du ressort (4) de l'actionneur afin de le charger.

6. Actionneur (1) selon la revendication 4 en combinaison avec la revendication 5, dans lequel la roue dentée (303) et le pignon (300a) sont agencés d'un même côté axial des deux cylindres adjacents (50, 51).

7. Actionneur (1) selon la revendication 4 en combinaison avec la revendication 5, dans lequel la roue dentée et le pignon sont agencés de part et d'autre des cylindres adjacents.

8. Actionneur (1) selon l'une quelconque de revendications précédentes, dans lequel le premier et deuxième cylindre (50, 51) ont le même diamètre externe (D), le diamètre interne du ressort enroulé à l'état relâché étant inférieur dans la zone de contact avec le premier cylindre (50).

9. Actionneur (1) selon la revendication 8, dans lequel le diamètre interne du ressort enroulé à l'état relâché dans la zone de contact avec le premier cylindre (50) est inférieur de 0,3 à 6 % au diamètre externe des cylindres.

10. Actionneur (1) selon l'une quelconque des revendications 1 à 9, dans lequel le diamètre externe du premier cylindre (50) est supérieur de 0,5 à 2 % à celui du deuxième cylindre, le diamètre interne du ressort enroulé à l'état relâché étant inférieur de 0,3 à 6 % au diamètre externe du deuxième cylindre.

11. Actionneur selon l'une quelconque revendications 1 à 10, comprenant une bague de guidage (53) en étant agencée axialement au moins le long du deuxième cylindre (51') et en entourant le ressort hélicoïdal (52') à spires (520') à une distance radiale (55) au maximum égale à 0,5 fois l'épaisseur e des spires du ressort à l'état relâché.

12. Actionneur selon la revendication 11, dans lequel la distance radiale (55) est comprise entre 5 et 10 % de l'épaisseur des spires (520') du ressort (52').

13. Actionneur selon la revendication 11 ou 12, dans lequel le ressort hélicoïdal (52') est montée avec ajustement serré dans la bague de guidage (53') elle-même montée avec ajustement serré dans le premier cylindre (50'), ces ajustements serrés étant réalisés sur au moins une partie (L1) de la dimension axiale du premier cylindre (50').

14. Actionneur (1) selon l'une quelconque des revendications précédentes, dans lequel les extrémités libres (521, 522) du ressort hélicoïdal (52) s'étendent selon la courbure des spires (520).

15. Actionneur (1) selon l'une quelconque des revendications précédentes, comprenant en outre un ressort hélicoïdal (7) à spires jointives (70) enroulé autour d'une partie cylindrique (500) solidaire du premier cylindre (50) et dont une extrémité recourbée (700) est fixée à une partie fixe de l'actionneur de sorte que la rotation des cylindres (500, 50) dans le sens (YY') inverse au sens (XX') soit bloquée.

16. Actionneur (1) du type à entraînement par moteur (2) selon l'une quelconque des revendications précédentes.

17. Interrupteur à haute ou moyenne tension, tel qu'un disjoncteur ou un sectionneur de terre, comprenant un actionneur (1) selon l'une quelconque des revendications précédentes.

18. Sectionneur de terre à pouvoir de fermeture sur court circuit comprenant un actionneur (1) selon l'une quelconque des revendications 1 à 16 dont la durée de fermeture est inférieure à 100 ms.

## Claims

1. An actuator (1) for an interrupter, comprising a first part (302, 31, 303) that is adapted to be driven by a source of driving energy, and a second part (300a, 301) that is adapted to operate a movable contact of the interrupter while the interrupter is operating, a free-wheel coupling device (5), for coupling the two parts (302, 31, 303; 300a, 301) of the actuator together so as to transmit the driving energy to a closure spring (4) of the actuator, whereby to preload the closure spring, and for uncoupling them for transmission of the torque from the preloaded closure spring to the movable contact but not to the said first part (302, 31, 303) of the actuator (1),
**characterized in that**
the free-wheel coupling device (5) comprises a first cylinder (50) fixed to the said first part (302, 31, 303), a second cylinder (51) fixed to the said second part (300a, 301) and, adjacent to the first cylinder (50) on a common axis (AA), a helical spring (52) having contiguous turns (520) wound around, and in contact with, the two adjacent cylinders (50, 51), being in axial abutment on the common axis, the coupling between the first cylinder (50) and the second cylinder (51) being obtained by rotating the first cylinder (50) in one direction (XX') and at a velocity greater than that of the second cylinder (51) at rest or in rotation in the said one direction (XX'), which causes radial contraction of the turns (520) of the said helical spring around the second cylinder (51) until the second cylinder reaches the velocity of the first cylinder (50), the free-wheel operation of the first cylinder (50) being obtained by rotating the second cylinder (51), in the said one direction (XX') but at a velocity greater than that of the first cylinder (50), which causes radial expansion of the turns (520) of the helical spring around the first cylinder (50) until the first cylinder is freely rotatable.

2. An actuator (1) according to claim 1, in which the direction of rotation (XX') of the first and second cylinders is the same both in coupled operation and in free-wheel operation.

3. An actuator (1) according to claim 2, wherein the second part (300a) comprises a shaft (300) fixed to the second cylinder (51), the two cylinders (50, 51) being carried by the said shaft (300).

4. An actuator (1) according to claim 3, wherein the first part comprises a toothed wheel (303) fixed to the first cylinder (50) and carried by the shaft (300).

5. An actuator (1) according to claim 3 or claim 4, wherein the second part comprises a pinion (300a) fixed to the shaft (300) that carries the two cylinders (50, 51) so that the pinion, when rotating, directly drives a further toothed wheel (301) which is fixed to the closure spring (4) of the actuator, whereby to preload the closure spring.

6. An actuator (1) according to claim 4 in combination with claim 5, wherein the said one toothed wheel (303) and the pinion (300a) are arranged on the same axial side of the two adjacent cylinders (50, 51).

7. An actuator (1) according to claim 4 in combination with claim 5, wherein the said one toothed wheel and the pinion are disposed on either side of the adjacent cylinders.

8. An actuator (1) according to any preceding claim, wherein the first cylinder (50) and second cylinder (51) have the same inside diameter (D), the inside diameter of the said spring in its released state being smaller in its zone of contact with the first cylinder (50).

9. An actuator (1) according to claim 8, wherein the inside diameter of the said spring in its released state in its zone of contact with the first cylinder (50) is in the range 0.3% to 6% of the outside diameter of the cylinders.

10. An actuator (1) according to any one of claims 1 to 9, wherein the outside diameter of the first cylinder (50) is greater by 0.5% to 2% than that of the outside diameter of the second cylinder (51), the inside diameter of the said spring in the released state being smaller by 0.3% to 6% than the outside diameter of the second cylinders.

11. An actuator according to any one of claims 1 to 10, comprising a guide ring (53) arranged axially at least along the second cylinder (51') and surrounding the helical spring (52') having turns (520') at a radial distance (55) no greater than 0.5 times the thickness e of the turns of the spring in the released state.

12. An actuator according to claim 11, in which the radiale distance (55) lies in the range 5% to 10% of the thickness of the turns (520') of the spring (52').

13. An actuator according to claim 11 or claim 12, in which the helical spring (52') is mounted as a tight fit in the guide ring (53'), itself mounted as a tight fit in the first cylinder (50'), these tight fits being implemented over at least a fraction (L1) of the axial dimension of the first cylinder (50').

14. An actuator (1) according to any preceding claim, wherein the free ends (521, 522) of the said helical spring (52) follow the curvature of the turns (520) of that spring.

15. An actuator (1) according to any preceding claim, comprising a further helical spring (7) with contiguous turns (70), which is wound around a cylindrical portion (500) fixed to the first cylinder (50), and which has a curved end portion (700) which is secured to a fixed portion of the actuator, in such a way that rotation of the cylinders (500, 50) in the opposite direction (YY') to the said direction of rotation (XX') is prevented.

16. An actuator (1) of the motor-driven type, adapted to be driven by a motor (2) and being in accordance with any preceding claims.

17. A high or medium voltage interrupter, such as a circuit breaker or a ground disconnector, having an actuator (1) according to any preceding claim.

18. A rounding power disconnector with short-circuit making capacity, having an actuator according to any one of claims 1 to 16 with a closing time of less than 100 ms.

## Patentansprüche

1. Stellglied (1) für einen Schalter mit einem ersten Teil (302, 31, 303), der dazu ausgelegt ist, durch eine Antriebskraft angetrieben zu werden, und einem zweiten Teil (300a, 301), der dazu aufgelegt ist, einen beweglichen Kontakt des Schalters während des Betriebs des Schalters anzufireiben, wobei eine Freilauf-Kopplungsvorrichtung (5) die zwei Teile (302, 31, 303; 300a, 301) des Stellglieds miteinander koppelt, um die Antriebskraft auf eine Feder (4) des Stellglieds zu übertragen, um sie zu spannen, und sie entkoppelt, um das Moment der gespannten Feder auf den beweglichen Kontakt, jedoch nicht auf den ersten Teil (302, 31, 303) des Stellglieds (1) zu übertragen, **dadurch gekennzeichnet, dass** die Freilauf-Kopplungsvorrichtung (5) einen ersten Zylinder (50) umfasst, der mit dem ersten Teil (302, 31, 303) verbunden ist, einen zweiten Zylinder (51), der mit dem zweiten Teil (300a, 301) verbunden und den ersten Zylinder (50) entlang einer gemeinsamen Achse (AA) benachbart ist, eine Schraubenfeder (52) mit aneinander gesetzten Windungen (520), die mit Kontakt um die zwei benachbarten Zylinder (50, 51) im axialen Anschlag entlang der gemeinsamen Achse gewickelt ist, wobei die Kopplung zwischen dem ersten (50) und dem zweiten (51) Zylinder durch die Drehung des ersten Zylinders (50) in einer Richtung (XX') und mit einer Geschwindigkeit größer als jene des zweiten Zylinders (51) beim Halt oder bei Drehung in der gleichen Richtung (XX') realisiert ist, was eine radiale Straffung der Windungen (520) um den zweiten Zylinder (51) herum bewirkt, bis dieser Letztgenannte die Geschwindigkeit des ersten Zylinders (50) erreicht, wobei die Freilauffunktion des ersten Zylinders (50) durch eine Drehung des zweiten Zylinders (51) in der gleichen Richtung (XX'), jedoch mit einer Geschwindigkeit größer als jene des ersten Zylinders (50) realisiert ist, was eine radiale Entspannung der Windungen (520) um den ersten Zylinder (50) herum bewirkt, bis dieser Letztgenannte drehfrei ist.

2. Stellglied (1) nach Anspruch 1, bei dem die Drehrichtung (XX') des ersten und des zweiten Zylinders im Kopplungsbetrieb und im Freilaufbetrieb die gleiche ist.

3. Stellglied (1) nach Anspruch 2, bei dem der zweite Teil (300a) eine mit dem zweiten Zylinder (51) verbundene Welle (300) umfasst, wobei die zwei Zylinder (50, 51) von der Welle (300) getragen werden.

4. Stellglied (1) nach Anspruch 3, bei dem der erste Teil ein mit dem ersten Zylinder (50) verbundenes und von der Welle (300) getragenes Zahnrad (303) umfasst.

5. Stellglied (1) nach Anspruch 3 oder 4, bei dem der zweite Teil ein Ritzel (300a) umfasst, das mit der die zwei Zylinder (50, 51) tragenden Welle (300) verbunden ist, wobei das Ritzel (300a) bei Drehung direkt ein anderes Zahnrad (301) antreibt, das mit der Feder (4) des Stellglieds verbunden ist, um sie zu spannen.

6. Stellglied (1) nach Anspruch 4 in Verbindung mit Anspruch 5, bei dem das Zahnrad (303) und das Ritzel (300a) auf ein und derselben axialen Seite der zwei benachbarten Zylinder (50, 51) angeordnet sind.

7. Stellglied (1) nach Anspruch 4 in Verbindung mit Anspruch 5, bei dem das Zahnrad und das Ritzel auf beiden Seiten der benachbarten Zylinder angeordnet sind.

8. Stellglied (1) nach einem der vorhergehenden Ansprüche, bei dem der erste und der zweite Zylinder (50, 51) den gleichen Außendurchmesser (D) aufweisen, wobei der Innendurchmesser der aufgewickelte Feder im entspannten Zustand in der Zone des Kontakts mit dem ersten Zylinder (50) kleiner ist.

9. Stellglied (1) nach Anspruch 8, bei dem der Innendurchmesser der aufgewickelten Feder im entspannten Zustand in der Zone des Kontakts mit dem ersten Zylinder (50) um 0,3 bis 6 % kleiner als der Außendurchmesser der Zylinder ist.

10. Stellglied (1) nach einem der Ansprüche 1 bis 9, bei dem der Außendurchmesser des ersten Zylinders (50) um 0,5 bis 2 % größer ist als jener des zweiten Zylinders, wobei der Innendurchmesser der aufgewickelten Feder im entspannten Zustand um 0,3 bis 6 % kleiner ist als der Außendurchmesser des zweiten Zylinders.

11. Stellglied nach einem der Ansprüche 1 bis 10, umfassend einen Führungsring (53), der axial wenigstens entlang des zweiten Zylinders (51') angeordnet ist und die Schraubenfeder (52') mit Windungen (520') in einem radialen Abstand (55) umgibt, der maximal gleich 0,5 mal der Dicke e der Windungen der Feder im entspannten Zustand ist.

12. Stellglied nach Anspruch 11, bei dem der radiale Abstand (55) zwischen 5 und 10 % der Dicke der Windungen (520') der Feder (52') enthalten ist.

13. Stellglied nach Anspruch 11 oder 12, bei dem die Schraubenfeder (52') mit Presspassung in dem Führungsring (53') montiert ist, der selbst wiederum mit Presspassung in dem ersten Zylinder (50') montiert ist, wobei diese Presspassungen über wenigstens einen Teil (L1) der axialen Abmessung des ersten Zylinders (50') realisiert sind.

14. Stellglied (1) nach einem der vorhergehenden Ansprüche, bei dem die freien Enden (521, 522) der Schraubenfeder (52) sich entlang der Krümmung der Windungen (520) erstrecken.

15. Stellglied (1) nach einem der vorhergehenden Anspruche, ferner umfassend eine Schraubenfeder (7) mit aneinandergesetzten Windungen (70), die um einen zylindrischen Teil (500) gewickelt ist, der mit dem ersten Zylinder (50) verbunden ist und ein gekrümmtes Ende (700) aufweist, das an einem festen Teil des Stellglieds derart befestigt ist, dass die Drehung der Zylinder (500, 50) in der zur Richtung (XX') inversen Richtung (YY') blockiert ist.

16. Stellglied (1) vom Typ zum Antrieb durch einen Motor (2) nach einem der vorhergehenden Anspruche.

17. Hoch- oder Mittelspannungsschalter, beispielsweise Leistungsschalter oder Erdungsschalter, umfassend ein Stellglied (1) nach einem der vorhergehenden Ansprüche,

18. Erdungsschalter mit Kurzschluss-Schaltvermögen, umfassend ein Stellglied (1) nach einem der Ansprüche 1 bis 16, dessen Schaltdauer kleiner als 100 ms ist.
